# EUROPÄISCHE PATENTANMELDUNG

(11) **EP 0 552 780 A1**
(43) Veröffentlichungstag der Anmeldung: **28.07.1993**
(21) Anmeldenummer: 93100922.9
(22) Anmeldetag: 21.01.1993
(51) Int. Cl.: H02G 3/16, H02G 3/10

(54) **Elektrischer Anschlusskasten**

(30) Priorität: 21.01.1992 DE 4201507
(71) Anmelder: Siemens Solar GmbH, D-80807 München (DE)
(72) Erfinder: Riermeier, Manfred, W-8059 Oberneuching (DE)
(74) Vertreter: Fuchs, Franz-Josef, Dr.-Ing.

(57) **Zusammenfassung**

Für einen elektrischen Anschlußkasten wird vorgeschlagen, die Trennung zwischen einem fest auf einer Unterlage montierten Unterteil und dem dazugehörigen Deckel schräg vorzunehmen, so daß das Unterteil auf der Seite der vorzunehmenden elektrischen Anschlüsse seine größte Höhe aufweist und mit der Unterlage einen Winkel kleiner 90° bildet.

## Beschreibung

Die Erfindung betrifft einen elektrischen Anschlußkasten, wie er insbesondere in der Haustechnik zur elektrischen Installation oder zum Anschließen stationärer elektrischer Geräte verwendet wird. Ein Anschlußkasten besteht üblicherweise aus zumindest einer Kabelklemme, die im Inneren eines zum Beispiel mit einem Deckel verschließbaren Kastens angeordnet ist. Elektrische Anschlußleitungen werden durch Kabeldurchführungen in das Gehäuse geleitet und an der Kabelklemme miteinander verbunden. Der Anschlußkasten dient somit zum Schutz der elektrischen Verbindung bzw. des Anschlusses gegen mechanische oder chemische Einwirkung, zum Beispiel gegen Feuchtigkeit, Treib- und Schmierstoffe oder gegen Staub.

Das Unterteil eines elektrischen Anschlußkastens ist fest auf einer Unterlage montiert, beispielsweise an einem elektrischen Gerät oder an einer Wand. Da sowohl Kabelklemme als auch Kabeldurchführungen im Unterteil des Anschlußkastens enthalten sind, bestimmt die Höhe des Unterteils im wesentlichen die Höhe des Anschlußkastens, wenn der Deckel flach ausgebildet ist.

Das Einführen von elektrischen Leitungen in den Anschlußkasten und das Anschließen derselben im Anschlußkasten erfolgt üblicherweise manuell. Insbesondere wenn der Anschlußkasten auf geringe Größe optimiert ist, kann dabei das Montieren in dem kleinen Kasten gegenüber einem frei liegenden Anschluß deutlich erschwert sein und kann daher eine hohe Fingerfertigkeitung und einen höheren Zeitaufwand erfordern.

Aus der DE 40 05 086 A1 ist eine Anschlußeinheit mit einem Mikroprozessor bekannt, die zum Anschließen eines Busses geeignet ist. Sie weist ein auf einer Wand zu befestigendes Basisteil und einen lösbaren Gehäuseteil auf. Mindestens eine Seitenwand der Basis ist höher als die übrigen und weist Kabeldurchtrittsöffnungen auf.

Aus der DE-GM 71 31 268 ist eine Dose für die elektrische Installation bekannt, die einen an einer Wand montierbaren Dosenboden und ein Oberteil aufweist, dessen Teilungsebene diagonal vom Dosenboden zu einer Stirnwand des Dosenbodens verläuft.

Aufgabe der vorliegenden Erfindung ist es daher, einen elektrischen Anschlußkasten anzugeben, der bei geringer Größe und Bauhöhe ein einfaches manuelles Anschließen von elektrischen Leitungen ermöglicht, und der wasserdicht ausgeführt ist, um eine Verwendung im Freien zu ermöglichen.

Diese Aufgabe wird erfindungsgemäß gelöst durch einen elektrischen Anschlußkasten mit
- einem fest auf einer Unterlage montierbaren Unterteil, welches im Inneren eine Kabelklemme und an einer Außenseite zumindest ein elektrisches Anschlußmittel aufweist,
- einem Deckel, und
- einer schrägen Deckel/Unterteiltrennung, bei der das Unterteil auf der Anschlußseite seine größte Höhe aufweist, und Dichtmitteln zur wasserdichten Abdichtung des Anschlußkastens bei dem die Anschlußseite des Unterteils gegen die Unterlage einen Winkel W1 bildet, wobei W1 kleiner 90° ist.

Weitere Ausgestaltungen der Erfindung sowie eine vorteilhafte Verwendung sind den Unteransprüchen zu entnehmen.

Durch die schräg ausgeführte Unterteilung des Anschlußkastens im Deckel und Unterteil erhält dieses eine Seitenwand, die eine für das Durchführen oder Anschließen von elektrischen Leitungen mit Hilfe von Anschlußmitteln ausreichende Höhe aufweist. Die gegenüberliegende Wand des Unterteils dagegen besitzt eine minimale Höhe, die nur wenig gegenüber der Unterlage aufträgt. Das Hantieren im Innern des Kastens ist daher von dieser Seite aus nahezu ungehindert möglich und es muß nicht "ums Eck" gearbeitet werden. Die Schwierigkeiten bei zu geringem Abstand zwischen Kabelklemme und störender Wand des Unterteils während des Hantierens entfallen, da die Kabelklemme nun von dieser Seite her frei zugänglich und außerdem gut einsehbar ist.

Durch die von der Senkrechten abweichende Neigung W1 der höheren Wand des schräg abgeteilten Unterteils wird das Anschließen bzw. Durchführen von elektrischen Leitungen an bzw. in dem Anschlußkasten weiter erleichtert. Der Anschluß der Kabel über das oder die Anschlußmittel erfolgt nun nicht mehr parallel zur Unterlage, sondern im spitzen Winkel dazu. Dadurch wird zusätzlicher Abstand gegenüber der Unterlage gewonnen, der ebenfalls ein einfacheres Hantieren erlaubt. In einer Ausführungsform der Erfindung, bei der die Kabeldurchführung durch eine Panzergewindeverschraubung erfolgt, wird zum Beispiel das Ansetzen von Schraubschlüsseln zum Fixieren eines Anschlußkabels erleichtert.

In einer bevorzugten Ausführung beträgt der Winkel W1 ca. 45°. In einer weiteren Ausführung beträgt der Winkel W1 ca. 75°.

Mit den Dichtmitteln wird das Eindringen von Wasser in den Anschlußkasten verhindert. Die Dichtmittel sind zwischen Deckel- und Unterteil sowie zwischen Unterteil und Unterlage angeordnet.

Eine besonders vorteilhafte Verwendung findet der erfindungsgemäße Anschlußkasten bei Solarmodulen, wo er üblicherweise auf der Rückseite der Module, beispielsweise durch Kleben aufgebracht wird. Das dabei verwendete Klebemittel, zum Beispiel ein Silikon, dient gleichzeitig als Dichtmittel zwischen Unterteil und Unterlage und verhindert das Eindringen von Feuchtigkeit in den Anschlußkasten.

Die aufgrund der Erfindung mögliche flache Ausführung des Anschlußkastens führt zu einem nur geringen Auftragen des Kastens gegenüber der Modulrückwand, so daß die Solarmodule in einem entsprechend geringen Abstand von einer festen Fläche auf diese aufgebracht und befestigt werden können. Ein Montagegestell für die Solarmodule muß daher üblicherweise keine weiteren Abstandshalter gegenüber der Fläche aufweisen. Die lichte Höhe des Anschlußkastens kann so gering sein, daß sie gegenüber einem eventuell vorhandenen Modulrahmen nicht aufträgt. Ein solches Modul kann daher mit seinem Rahmen flach auf jeder Unterlage aufliegen und dort besser auf dieser befestigt werden. Ein weiterer Vorteil eines flachen Anschlußkastens ergibt sich bei Lagerung und Transport von mit dem Anschlußkasten versehenen Solarmodulen aufgrund des geringeren Raumbedarfs, insbesondere beim Aufeinanderstapeln der Solarmodule.

Im folgenden wird die Erfindung anhand von Ausführungsbeispielen und der dazugehörigen Figuren näher erläutert. Dabei zeigen
- Figuren 1 und 2: verschiedene schematische Ansichten eines erfindungsgemäßen Anschlußkastens,
- Figuren 3 bis 5: zeigen verschiedene Möglichkeiten, wie eine wasserdichte Deckel/Unterteilabdichtung ausgeführt werden kann, während in
- Figur 6: ein mit einem erfindungsgemäßen Anschlußkasten versehenes Solarmodul als Anwendung dargestellt ist.

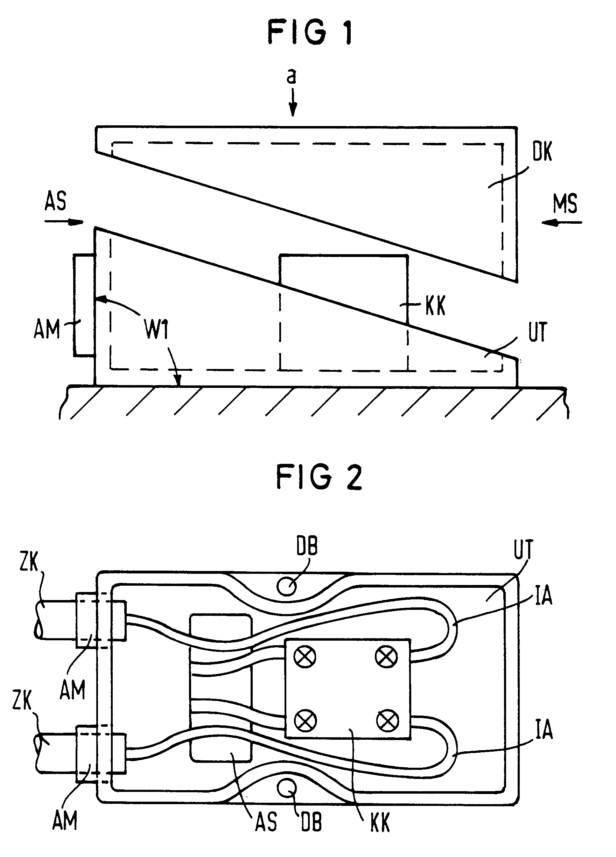

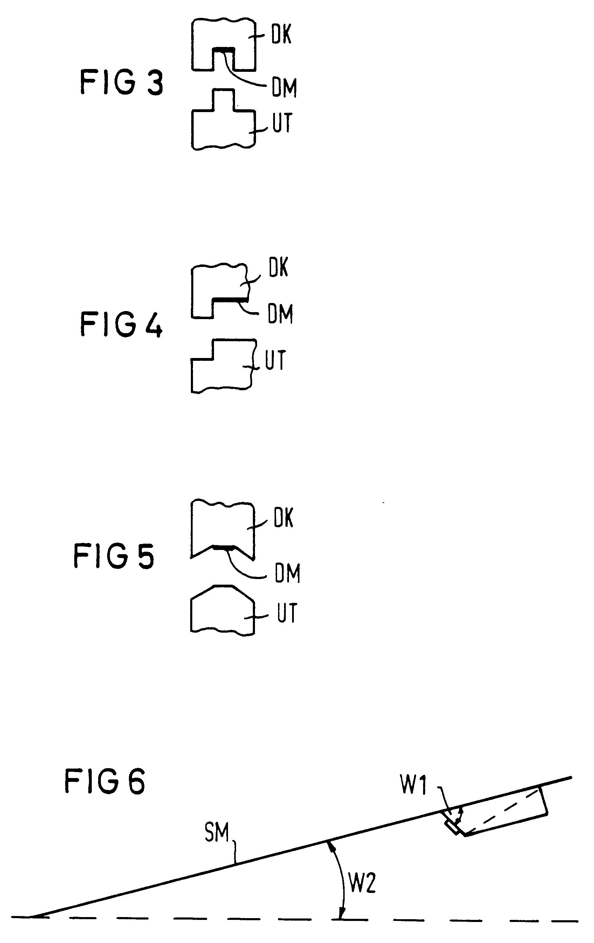

Figur 1 zeigt einen erfindungsgemäßen Anschlußkasten, bestehend aus dem auf einer Unterlage UL befestigten Unterteil UT und dem im Abstand dazu dargestellten Deckel DK in der Seitenansicht. Gut zu erkennen ist die schräge Deckel/Unterteiltrennung, bzw. die keilförmige Ausbildung von sowohl Unterteil UT als auch Deckel DK.

An der Anschlußseite AS, an der das Unterteil UT seine höchste Höhe aufweist, ist zumindest ein elektrisches Anschlußmittel AM vorgesehen. Dieses besteht üblicherweise aus einer Kabeldurchführung, beispielsweise einer Panzergewindeverschraubung (PG-Verschraubung). Doch auch andere Ausführungen von vorzugsweise wasserdichten Kabeldurchführungen sind möglich, ebenso wie andere Vorrichtungen zum Herstellen einer elektrischen Verbindung, beispielsweise Steckverbinder.

Im Inneren des Unterteils UT ist eine Kabelklemme KK befestigt, an der die gewünschten elektrischen Verbindungen vorgenommen werden. Die Kabelklemme KK ist im Unterteil UT eingesteckt, eingeklebt oder anderweitig fixiert. Vorzugsweise wird sie von unten in das Unterteil UT vor der Montage auf die Unterlage UL eingesteckt, wo sie gleichzeitig mit der Befestigung des Unterteils UT auf der Unterlagen UL fixiert wird. Diese Befestigung des Unterteils UT kann beispielsweise durch Kleben erfolgen, wobei gleichzeitig eine wasserdichte Abdichtung zwischen Unterlage und Unterteil erfolgen kann.

Die Herstellung der elektrischen Verbindung in der Kabelklemme KK bzw. das Einstecken von Kabeln in diese kann beim erfindungsgemäßen Anschlußkasten in vorteilhafter Weise von der Montageseite MS erfolgen, an der das Unterteil UT seine geringste Höhe aufweist. Dadurch ist eine gute Hantierbarkeit von der Montageseite sowie eine freie Sicht auf die Kabelklemme KK möglich.

Der Winkel W1, den das Unterteil an der Anschlußseite AS mit der Unterlage UL bildet, ist hier als rechter Winkel dargestellt, nimmt jedoch in vorteilhafter Weise Werte im Bereich von 45° an. Dies hat den Vorteil, daß bei gleichbleibender Höhe des Anschlußkastens an der Anschlußseite AS eine größere Fläche für die Anschlußmöglichkeit AM zur Verfügung steht. Dadurch kann mehr Freiheit beim Hantieren, beispielsweise beim Fixieren oder Lösen von PG-Verschraubungen oder vergleichbaren Anschlußmöglichkeiten gewonnen werden. Ein weiterer Vorteil ist, daß die Zuführung von elektrischen Leitungen zur Anschlußmöglichkeit AM in einem solchen spitzen Winkel zur Unterlage UL erfolgen kann, der der Abweichung des Winkels W1 von 90° entspricht. Mit einem von 90° abweichenden Winkel W1 wird daher bei gleichbleibender Höhe des Anschlußkastens auch an der Anschlußseite mehr Hantierungsfreiheit gewonnen.

Figur 2 zeigt das Unterteil UT eines erfindungsgemäßen Anschlußkastens von oben (siehe Pfeil a in Figur 1), bzw. ein Blick in des Unterteil UT. Das Unterteil UT ist hier rechteckig dargestellt, kann aber auch eine andere Grundfläche aufweisen, wenn es für die entsprechende Anwendung zweckdienlich ist. An der Anschlußseite AS münden Zuleitungskabel ZK in das Anschlußmittel AM, beispielsweise eine Kabeldurchführung. Im Inneren des Unterteils UT bzw. des Anschlußkastens werden die Zuleitungskabel ZK zur Kabelklemme KK geleitet und dort von der Montageseite her angeschlossen. Vorzugsweise ist im Innern des Unterteils UT die Außenisolierung vom Zuleitungskabel ZK entfernt, so daß die Hantierung mit dem feineren Anschlußkabel AK erleichtert ist.

Die internen Anschlüsse IA des Anschlußkastens werden im dargestellten Ausführungsbeispiel durch eine Aussparung AS im Boden des Unterteils UT von der Unterlage her zugeführt und ebenfalls an der Kabelklemme KK befestigt. Im Ausführungsbeispiel sind zwei Zuleitungekabel und entsprechend zwei interne Anschlüsse IA dargestellt, wobei jedoch die Zahl der herzustellenden elektrischen Verbindungen nach oben oder unten abweichen kann. Auch ist es möglich, im Anschlußkasten ausschließlich von außen zugeführte elektrische Leitungen zu verbinden, bzw. auch die internen Anschlüsse IA durch Kabeldurchführungen in der Außenwand des Unterteils UT bzw. entsprechende andere Anschlußmöglichkeiten AM im Anschlußkasten anzuschließen.

Eine zusätzliche Ausnehmung kann im Unterteil UT für die Kabelklemme KK vorgesehen sein und vorzugsweise ein passgenaues Einstecken der Kabelklemme in das Unterteil, vorzugsweise von unten, erlauben.

Der obere Rand des Unterteils UT weist vorzugsweise ein Profil zum Einrasten bzw. zum paßgenauen Aufsetzen des Deckels DK auf, das einem entsprechenden negativen Profil im Deckel bzw. am Rand des Deckels entspricht. Das Profil ist zur Aufnahme eines Dichtmittels geeignet, beispielsweise eines Dichtungsgummis. Das zum Beispiel in Form einer Nut/Federverbindung ausgeführte Profil weist derartig überlappende Kanten auf, daß oberflächlich am Anschlußkasten nach unten abfließendes Wasser nicht in den Anschlußkasten eindringen kann. Dies kann bei einer Montage des Anschlußkastens mit einer nach unten weisenden Unterlage eine Vertauschung der Profile erfordern.

Außerhalb des durch das Profil vorgegebenen Innenraums des Unterteils befindet sich eine Vorrichtung zur Deckelbefestigung DB, beispielsweise Bohrlöcher. Diese sind vorzugsweise im Innern der rechteckigen Grundfläche des Anschlußkastens angeordnet, so daß die Außenfläche des Anschlußkastens keine unnötigen Vorsprünge aufweist. Die entsprechenden Schrauben zur Befestigung des Deckels können unverlierbar im Deckel angeordnet sein. Wird der Anschlußkasten aus Kunststoff ausgeführt und zur Deckelbefestigung Schrauben mit Blechgewinde verwendet, sind im Unterteile keine Metallmuttern erforderlich.

In den Figuren 3 bis 5 sind verschiedene Ausführungsformen für ein Profil im Trennungsbereich zwischen Deckel und Unterteil dargestellt. Das an geeigneter Stelle, zum Beispiel innerhalb einer Nut im Profil angeordnete Dichtmittel DM ist beispielsweise ein Dichtungsring, welcher eingelegt, eingeklebt, eingeschweißt oder eingeschäumt sein kann. Die in den Figuren 3 bis 5 dargestellten Profile sind für Anschlußkästen vorgesehen, die auf nach oben weisenden Unterlagen befestigt werden sollen.

Bei entsprechender Befestigung an nach unten weisenden Unterlagen wie beispielsweise bei aufgestellten Solarmodulen ist ein Vertauschen der Profile zwischen Deckel DK und Unterteil UT erforderlich, da nur so eine wasserabweisende Überlappung von Profilkanten bzw. Lippen ermöglicht wird. Entsprechend muß dann auch die Befestigung des Dichtmittels im Unterteil erfolgen.

Figur 6 zeigt eine besonders vorteilhafte Anwendung des erfindungsgemäßen Anschlußkastens für ein Solarmodul SM. Gerade hier bietet ein entsprechend der Erfindung flach ausführbarer Anschlußkasten die bereits eingangs erwähnten großen Vorteile. Die schräge Deckel/Unterteiltrennung schafft Montage und Sichtfreiheit, die insbesondere bei einem Solarmodul von Bedeutung ist, da der Anschlußkasten an der Rückseite des Solarmoduls angeklebt ist und sich bei einem entsprechend dem Sonnenstand aufgestellten Solarmodul an dessen Unterseite befindet. Ein bei einem aufgestellten Solarmodul SM erforderlches Hantieren am Anschlußkasten muß über Kopf erfolgen und ist daher zusätzlich erschwert.

In der in Figur 6 dargestellten Anordnung ist die Anschlußseite des Anschlußkastens in einem Winkel W1 gegen die Unterlage bzw. das Solarmodul SM geneigt, wobei der Winkel W1 hier einen optimalen Wert von ca. 75° besitzt. Wenn auch das Solarmodul SM in einem Winkel W2 gegen die Horizontale geneigt ist, ist der Anschlußkasten vorzugsweise mit nach unten weisender Anschlußseite montiert, um ein Eindringen von Wasser durch die Anschlußmittel zu erschweren.

Bei Solarmodulen können in den Anschlußkästen zusätzlich Bypass-Dioden eingebaut sein, die das Solarmodul bei teilweiser Abschattung vor Zerstörung schützen.

Bei herkömmlichen Solarmodulen erfolgt die Stromableitung über metallische Bändchen, die an der Rückseite aus dem Substrat herausragen. Derartige Bändchen können mit einer speziellen Kabelklemme in einfacher Weise eingeklemmt werden, wodurch eine vereinfachte Montage ermöglicht wird. Das anzuschließende Anschlußkabel kann in herkömmlicher Art und Weise durch Festschrauben in der Kabelklemme oder mittels Kabelklemme mit Federklemmen erfolgen.

In einer weiteren Ausgestaltung der Erfindung ist das Oberteil der Kabelklemme lösbar im Unterteil des Anschlußkastens befestigt und kann gegebenenfalls bei einem Defekt in einfacher Weise gegen eine Ersatzklemme ausgetauscht werden.

## Patentansprüche

1. Elektrischer Anschlußkasten mit
- einem fest auf einer Unterlage (UL) montierbaren Unterteil (UT), welches im Inneren eine Kabelklemme (KK) und an einer Anschlußseite (AS) zumindest ein elektrisches Anschlußmittel (AM) aufweist,
- einem Deckel (DK),
- einer schrägen Deckel/Unterteiltrennung, bei der das Unterteil (UT) auf der Anschlußseite (AS) seine größte Höhe aufweist und
- Dichtmitteln (DM) zur wasserdichten Abdichtung des Anschlußkastens, bei dem die Anschlußseite (AS) des Unterteils (UT) gegen die Unterlage (UL) einen Winkel W1 bildet, wobei W1 kleiner 90° ist.

2. Anschlußkasten nach Anspruch 1, bei dem die aufeinanderliegenden Kanten von Deckel (DK) und Unterteil (UT) derart überlappen, daß oberflächlich am Anschlußkasten abfließendes Wasser nicht in das Innere des Kastens eindringen kann.

3. Anschlußkasten nach einem der Ansprüche 1 oder 2, bei dem als Dichtmittel (DM) eine Dichtung zwischen Unterteil (UT) und Deckel (DK) direkt in eines der Teile eingeschäumt, gespritzt oder gegossen ist.

4. Anschlußkasten nach einem der Ansprüche 1 bis 3, bei dem als Anschlußmittel (AM) Panzergewindeverschraubungen (PG-Verschraubungen) vorgesehen sind.

5. Anschlußkasten nach einem der vorangehenden Ansprüche, bei dem der Deckel (DK) am Unterteil (UT) anschraubbar ist.

6. Anschlußkasten nach einem der vorangehenden Ansprüche, bei dem eine Verklebung des Unterteils (UT) mit der Unterlage (UL) als Dichtmittel (DM) vorgesehen ist.

7. Verwendung des Anschlußkastens bei Solarmodulen durch Aufkleben auf der Rückseite eines Solarmoduls (SM).
